# EUROPÄISCHE PATENTSCHRIFT

(11) **EP 2 112 384 B1**
(45) Veröffentlichungstag und Bekanntmachung des Hinweises auf die Patenterteilung: **21.08.2013**
(21) Anmeldenummer: 08007880.1
(22) Anmeldetag: 23.04.2008
(51) Int. Cl.: F16B 13/10

(54) **Dübel mit Befestigungselement und Hülse**
Dowel with fixing element and sleeve
Cheville dotée d'un élément de fixation et d'une douille

(43) Veröffentlichungstag der Anmeldung: 28.10.2009
(73) Patentinhaber: AfM Technology GmbH, 73430 Aalen (DE)
(72) Erfinder: Heimer, Dietmar, 55122 Mainz (DE)
(74) Vertreter: Grünecker, Kinkeldey, Stockmair & Schwanhäusser

(56) Entgegenhaltungen:
- CH-A- 325 754
- DE-A1- 2 548 495
- DE-A1- 10 339 147
- DE-A1- 10 353 237
- FR-A- 2 657 402
- GB-A- 1 286 660

## Beschreibung

### Gebiet der Erfindung

Die Erfindung betrifft eine Befestigungseinrichtung zur Verankerung in einem Baustoff sowie ein Verfahren zur Verankerung der Befestigungseinrichtung.

### Stand der Technik

Auf dem Markt erhältliche Dübel in verschiedensten Variationen aus Kunststoff oder Metall mit oder ohne Hülse weisen einige Nachteile auf. Die Kunststoffdübel streuen bei den Auszugswerten verhältnismäßig stark und sind dabei u.a. von den Toleranzen des Durchmessers des Befestigungsloches und von der Größe und ggf. auch der Eindringtiefe der gewählten Befestigungsschraube stark abhängig. Unter ungünstigen Verhältnissen kann die minimale Belastbarkeit erheblich abfallen.

Weiterhin sind dübelartige Vorrichtungen zum Befestigen von Gegenständen an Mauerwerken bekannt, die insbesondere zum Halten von Fassadenverkleidungen und dergleichen vorgesehen ist. Sie weist eine langgestreckte, rohrartige, längsgeschlitzte Hülse sowie eine Befestigungsschraube dafür auf. Nach dem Festziehen der Befestigungsschraube bildet sich eine in axialer Richtung vergleichsweise schmale ringförmige Befestigungszone am inneren Ende der langgestreckten Spreizhülse.

Der Zeitaufwand bei der Eindreharbeit ist insbesondere ab einem Durchmesser von etwa 10 mm sehr groß, da eine verhältnismäßig große Anzahl an Umdrehungen bei der Befestigungsschraube durchgeführt werden müssen.

Eine weitere Befestigungseinrichtung ist aus der DE 2 657 402 bekannt.

### Beschreibung der Erfindung

Angesichts der Nachteile des Stands der Technik, liegt der Erfindung das Problem zugrunde, eine Befestigungseinrichtung bzw. einen Dübel bereitzustellen, der die oben genannten Nachteile überwindet, und die insbesondere ein schnelles und stabiles verankern der Befestigungseinrichtung ermöglicht.

Das genannte Problem wird gelöst durch eine erfindungsgemäße Befestigungseinrichtung zur Verankerung in einem Baustoff mit einem Befestigungselement, das einen axial konischen Verankerungsbereich und einen Befestigungsbereich aufweist, und einer radial nachgiebigen Klemmhülse, die zwischen dem Verankerungsbereich und dem Baustoff verklemmbar ist die, die Merkmale des Anspruchs 1 aufweist.

Die erfindungsgemäße Befestigungseinrichtung umfasst demnach ein Befestigungselement, welches einen Verankerungsbereich aufweist, der rotationssymmetrisch um dessen Längsachse in einer konischen Form ausgebildet ist, also in der Form eines Kegelstumpfes. Das Befestigungselement weist weiterhin einen Befestigungsbereich auf, der an dem Ende des konischen Verankerungsbereichs angeordnet ist, an welchem der Kegelstumpf den kleinsten Durchmesser aufweist. Das Befestigungselement mit Verankerungsbereich und Befestigungsbereich kann einstückig oder auch mehrstückig ausgebildet sein.

Weiterhin umfasst die erfindungsgemäße Befestigungseinrichtung eine radial nachgiebige Klemmhülse, die zwischen dem Verankerungsbereich des Befestigungselements und dem Baustoff, in dem die Befestigungseinrichtung verankert werden soll, verklemmbar ist.

Diese Verklemmung erfolgt dadurch, dass das Befestigungselement mit dem größeren Durchmesser des konischen Verankerungsbereichs voran in eine Ausnehmung des Baustoffs - beispielsweise einer Bohrung - eingesetzt wird und die Klemmhülse daraufhin zwischen dem konischen Verankerungsbereichs des Befestigungselements und dem Baustoff eingebracht und verklemmt wird. Dabei kann z. B. der konische Verankerungsbereich die radial nachgiebige Klemmhülse derart aufweiten, dass die Außenseite der Klemmhülse kraftschlüssig mit dem Baustoff in Verbindung tritt.

Am Befestigungsbereich kann ein zu befestigender Gegenstand befestigt werden. Beispielsweise kann die Befestigungseinrichtung in einem Betonboden verankert werden und das Befestigungselement kann als Aufnahme für einen Retroreflektor ausgebildet sein, wodurch ein Festpunkt für die optische Vermessung mit Lasertrackem in der 3D-Koordinatenmesstechnik definiert ist.

Die erfindungsgemäße Befestigungseinrichtung kann andererseits jedoch auch in einer Decke oder in einer Wand verankert werden, und der Befestigungsbereich kann beispielsweise ein Gewinde aufweisen, an welches das zu befestigende Element geschraubt werden kann.

Die erfindungsgemäße Befestigungseinrichtung kann derart weitergebildet werden, dass die Dimensionierung des Verankerungsbereichs und der Klemmhülse derart aufeinander abgestimmt sind, dass die Klemmhülse durch den Verankerungsbereich zum Verklemmen radial aufweitbar ist.

Die geometrische Gestaltung des konischen Verankerungsbereichs in Bezug auf Durchmesser und Konuswinkel und der Durchmessers der Klemmhülse sind aufeinander abgestimmt, und sie sind ihrerseits auch auf die Größe eines Bohrlochs in dem Baustoff abgestimmt, sodass bei einem Einschlagen der Klemmhülse in das Bohrloch die Klemmhülse über den sich nach innen aufweitenden konusförmigen Verankerungsbereich gleitet und dadurch radial aufgeweitet wird bis ein kraftflüssiger Kontakt zu dem Baustoff hergestellt ist.

Alternativ dazu kann die Dimensionierung des Verankerungsbereichs und der Klemmhülse sowie des Bohrlochs auch derart aufeinander abgestimmt sein, dass die Klemmhülse beim Einschlagen in das Bohrloch durch den Baustoff radial zusammengedrückt wird und die Klemmhülse solange vorangetrieben wird, bis sie in Kontakt mit dem konischen Verankerungsbereich kommt und dabei dann wieder gegen die Bohrlochwandung gepresst wird bis eine kraftschlüssige Verklemmung mit dem Baustoff erfolgt ist.

Eine andere Weiterbildung der erfindungsgemäßen Befestigungseinrichtung besteht darin, dass die Innenseite der Klemmhülse in flächigen Kontakt mit der Außenseite des konischen Verankerungsbereichs gebracht werden kann. Dies hat den Vorteil, dass die kraftschlüssige Verklemmung flächig erfolgt, wodurch eine zuverlässige Verankerung des Befestigungselements erzielt wird.

Erfindungsgemäß besteht die Befestigungseinrichtung darin, dass die Innenseite der Klemmhülse konisch ausgebildet ist, mit einem Winkel, welcher demjenigen des konischen Verankerungsbereichs entspricht. Auf diese Weise ergibt sich eine große Kontaktfläche zwischen dem konischen Verankerungsbereich und er konisch ausgebildeten Innenseite der Klemmhülse, wodurch eine gleichmäßige Verklemmung mit dem Baustoff erzielt werden kann.

Eine andere Weiterbildung der erfindungsgemäßen Befestigungseinrichtung besteht darin, dass die Klemmhülse einen Längsschlitz - also in axialer Richtung - aufweisen kann. Auf diese Weise kann auf einfache Weise eine Klemmhülse zur Verfügung gestellt werden, die radial nachgiebig ist, insbesondere dann wenn die Klemmhülse aus einem metallischen Material besteht.

Eine andere Weiterbildung der erfindungsgemäßen Befestigungseinrichtung besteht darin, dass das Material der Klemmhülse Kunststoff, insbesondere Hart-PVC, oderMetall, insbesondere Messing, umfassen kann. Wenn die Klemmhülse aus Kunststoff besteht, kann das Befestigungselement sowohl in harten Werkstoffen als auch in weichen Werkstoffen wie z. B. Gas- oder Porenbeton verwendet werden. Falls die Klemmhülse aus Metall besteht, wird eine sehr stabile Verankerung in dem Baustoff erzielt.

Eine andere Weiterbildung der erfindungsgemäßen Befestigungseinrichtung besteht darin, dass der Befestigungsbereich ein Gewinde, insbesondere einen Gewindebolzen, und/oder eine Kalotte, insbesondere eine Kugelkalotte, und/oder einen Haken und/oder eine Öse und/oder einen Magneten und/oder ein Bajonett und/oder eine Klebefläche umfassen kann. Falls der Befestigungsbereich eine Gewinde aufweist, kann z. B. ein Verlängerungsstück mit einer eigenen Aufnahme für einen Retroreflektor aufgeschraubt werden, um unzugängliche Bodenpunkte mit dem Verlängerungsstück zu adaptieren und so für einen Lasertracker zugänglich zu machen.

Eine andere Weiterbildung der erfindungsgemäßen Befestigungseinrichtung besteht darin, dass das Befestigungselement Metall, bevorzugt Automatenstahl, umfassen kann. Auf diese Weise wird das Befestigungselement stabil ausgebildet.

Eine andere Weiterbildung der erfindungsgemäßen Befestigungseinrichtung besteht darin, dass sich der konische Verankerungsbereich zum Befestigungsbereich hin verjüngen kann. Auf diese Weise kann der Befestigungsbereich zur offenen Seite eines nicht durchgängigen Bohrlochs eines Baustoffs weisen.

Alternativ dazu kann z. B. zur Verwendung bei Durchgangsbohrungen der Befestigungsbereich an dem Ende des Konus angeordnet sein, welcher den größten Durchmesser hat, sodass beispielsweise bei einer Durchgangsbohrung in einer Wand die Klemmhülse von einer Seite hineingeschlagen wird, während der Befestigungsbereich auf der anderen Seite der Wand angeordnet ist.

Erfindungsgemäß besteht die Befestigungseinrichtung darin, dass diese eine Abdeckung zum Abdecken des Befestigungselements umfassen kann. Dadurch kann gewährleistet werden, dass bei Befestigungseinrichtungen, die zur Aufnahme von verschiedenen Körpern, die regelmäßig gewechselt werden können, geeignet ist, insbesondere, dass dabei der Befestigungsbereich des Befestigungselements nicht beschädigt wird. Besonders bevorzugt kann die Abdeckung derart ausgebildet sein, dass sie voll versenkbar, wasserdicht schließend und auf das Befestigungselement aufschraubbar ist.

Erfindungsgemäß ist die Abdeckung auf ein Gewinde des Befestigungselements aufschraubbar, derart, dass die Abdeckung flächig eben mit einer Oberfläche des Baustoffs ist. Dadurch kann insbesondere für Verankerungen im Bodenbereich mit Abdeckung eine ebene Fläche erhalten werden, falls die Befestigungseinrichtung nicht verwendet wird.

Eine andere Weiterbildung der erfindungsgemäßen Befestigungseinrichtung besteht darin, dass die Klemmhülse an deren Außenseite konische Widerhaken aufweist. Auf diese Weise kann eine gute Verbindung mit dem Baustoff erzielt werden, insbesondere können dadurch hohe Auszugswerte erzielt werden.

Dass oben genannte Problem wird ebenfalls durch das erfindungsgemäße Verfahren zur Verankerung einer erfindungsgemäßen Befestigungseinrichtung in einem Baustoff gelöst, welches die folgenden Schritte umfasst: Einbringen des Befestigungselements in ein Verankerungsloch, insbesondere in eine Bohrung, in dem Baustoff, wobei sich der konische Verankerungsbereich zur offenen Seite des Verankerungslochs hin verjüngt, und Verklemmen der Klemmhülse zwischen dem Verankerungsbereich und dem Baustoff. Die Vorteile dieses Verfahrens entsprechen den bereits im Bezug auf die Befestigungseinrichtung genannten Vorteilen.

Das erfindungsgemäße Verfahren kann dadurch weitergebildet werden, dass das Verklemmen der Klemmhülse durch eine momentane Krafteinwirkung auf die Klemmhülse erfolgt, insbesondere durch Schlagen in axialer Richtung auf einen auf die Klemmhülse aufgebrachten Einschlagadapter, wodurch die Klemmhülse über den axial konischen Verankerungsbereich gleitet und dieser die Klemmhülse radial aufweitet und zwischen dem Verankerungsbereich und dem Baustoff verklemmt.

Die verschiedenen Weiterbildungen lassen sich unabhängig voneinander einsetzen oder miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

- Fig. 1A - 1D: zeigen verschiedene Ansichten des Befestigungselements der erfindungsgemäßen Befestigungseinrichtung.
- Fig. 2A - 2D: zeigen verschiedene Ansichten der Klemmhülse der erfindungsgemäßen Befestigungseinrichtung.
- Fig. 3A - 3D: zeigen verschiedene Ansichten der gesamten erfindungsgemäßen Befestigungseinrichtung.

### Beschreibung der Ausführungsformen

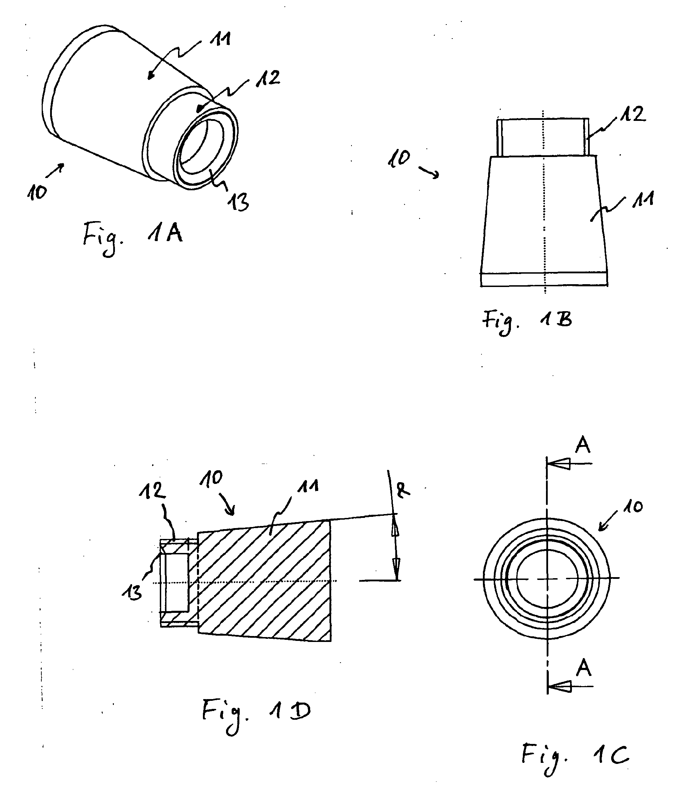

Die Figuren 1A bis 1D zeigen verschiedene Ansichten des Befestigungselements 10 der erfindungsgemäßen Befestigungseinrichtung. Das Befestigungselement 10 weist einen axial konischen Verankerungsbereich 11 und einen Befestigungsbereich 12 auf. Der Öffnungswinkel des konischen Bereichs ist mit α bezeichnet. Der Befestigungsbereich 12 weist an seiner Außenseite ein Gewinde auf, auf das eine Abdeckkappe geschraubt werden kann.

Weiterhin weist der Befestigungsbereich einen Auflageabschnitt 13 auf, auf den eine Retroreflektorkugel aufgelegt z.B. durch einen (nicht gezeigten) Magneten befestigt werden kann wenn das Befestigungselement in einem Bodenloch angeordnet ist. Diese Anordnung erfolgt derart, dass das Ende des konischen Bereichs mit größerem Durchmesser in dem Bodenloch nach unten weist.

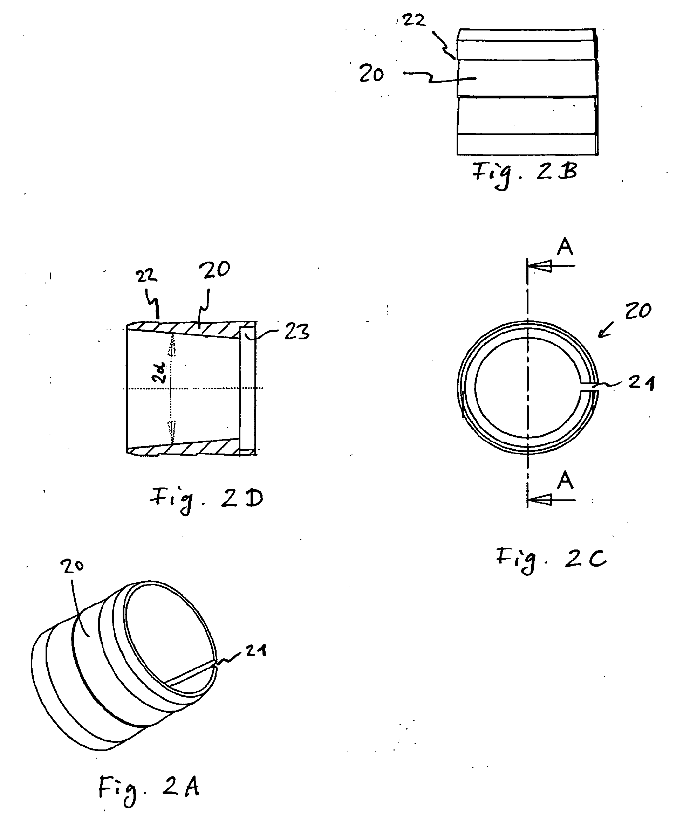

Figuren 2A bis 2D zeigen verschiedene Ansichten der Klemmhülse 20 der erfindungsgemäßen Befestigungseinrichtung. Die Klemmhülse 20 ist auf ihrer Innenseite konisch ausgebildet, und zwar derart, dass der Öffnungswinkel demjenigen des konischen Verankerungsbereichs 11 des Befestigungselements 10 nach Figur 1 entspricht. Weiterhin weist die Klemmhülse 20 einen Längsschlitz 21 auf. Die Außenseite der Klemmhülse 20 ist zudem mit konischen Widerhaken 22 versehen, die sich mit Unebenheiten des Baustoffs verhaken können.

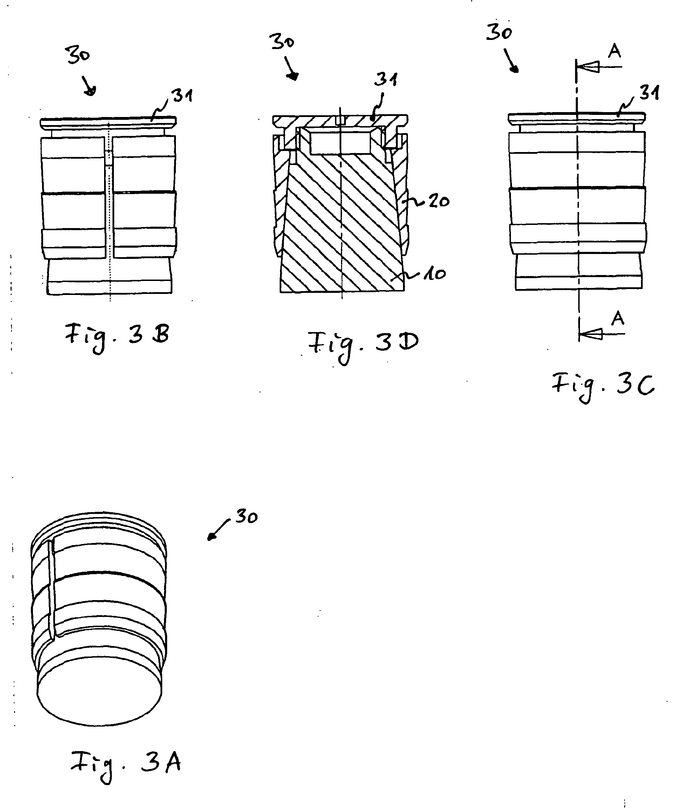

Die Figuren 3A bis 3D zeigen verschiedene Ansichten der gesamten erfindungsgemäßen Befestigungseinrichtung 30. Die gesamte Befestigungseinrichtung 30 besteht dabei aus dem Befestigungselement 10, der Klemmhülse 20 sowie einer Abdeckung 31.

Die Vorgehensweise zum Verankern der Befestigungseinrichtung ist wie folgt. Zunächst wird in dem Baustoff, beispielsweise in einem Betonboden, ein Loch gebohrt bzw. ausgebrochen. Der Durchmesser des Bohrlochs ist dabei nur geringfügig größer als der größte Durchmesser des konischen Verankerungsbereichs 11 des Befestigungselements 10. Das Befestigungselement 10 wird daraufhin in das Bohrloch eingesetzt und z.B. mit Sand in der Höhe nivelliert. Anschließend wird die Klemmhülse 20 auf den konischen Verankerungsbereich 11 aufgesetzt und mit einem auf dem inneren Rand 23 aufgelegten Einschlagadapter durch einen Schlag in axialer Richtung zwischen den Verankerungsbereich 11 und dem Baustoff verklemmt. Dabei weitet sich die Klemmhülse 20 aufgrund des Schlitzes 21 in radialer Richtung auf, sodass eine kraftschlüssige Verbindung zwischen dem konischen Verankerungsbereich 11 des Befestigungselements 10 der Klemmhülse 20 und dem Baustoff zustande kommt.

Bevorzugte Ausbildungen der Befestigungseinrichtuing sind nachfolgend noch einmal zusammengefasst.

Der Dübel wird im Bedarfsfall zumindest teilweise, vorzugsweise ganz aus Kunststoff hergestellt um möglichst sowohl in hartem Werkstoff wie Beton als auch in weicherem Werkstoff wie z. B. Gas- oder Porenbeton verwendet werden zu können.

Eine wichtige Aufgabe der Erfindung besteht darin, den Dübel so auszugestalten, dass dieser möglichst für verschiedene Anwendungsgebiete gleichermaßen geeignet ist, z. B. für das Anbringen von sogenannten Ankern oder als versenkbare Halterung für Retroreflektoren, wie sie in der optischen 3D Messtechnik beispielsweise als Festpunkte bei der Vermessung von Teilchenbeschleunigem eingesetzt werden. Dazu ist das Befestigungselement mit einem Außengewinde als auch mit einer Kugelkalotte versehen.

Die Verankerung des Dübels in dem Bohrloch erfolgt dadurch, dass die konische Hülse mit einem Einschlagadapter durch einen Schlag in axialer Richtung durch das konische Befestigungselement gleichmäßig in radialer Richtung geweitet wird. Die Hülse verfügt über konische Widerhaken die gewährleisten, dass extrem hohe Auszugswerte erreicht werden.

Da der Dübel zur Aufnahme unterschiedlichster Körper, die regelmäßig wechseln können, geeignet ist, muss gewährleistet sein, dass die Retroreflektoraufnahme / Gewinde des Befestigungselementes nicht beschädigt wird. Erfindungsgemäß wird das durch eine voll versenkbare, wasserdicht schließende Abdeckung realisiert, die auf dem Befestigungselement aufgeschraubt wird.

## Patentansprüche

1. Befestigungseinrichtung (30) zur Verankerung in einem Baustoff mit
einem Befestigungselement (10), das einen axial konischen Verankerungsbereich (11) und einen Befestigungsbereich (12) aufweist, und
einer radial nachgiebigen Klemmhülse (20), die zwischen dem Verankerungsbereich und dem Baustoff verklemmbar ist;
eine Abdeckung (31) zum Abdecken des Befestigungselements (10);
wobei die Innenseite der Klemmhülse (20) konisch ausgebildet ist, mit einem Winkel, welcher demjenigen des konischen Verankerungsbereichs (11) entspricht; und
wobei die Abdeckung (31) derart auf ein Gewinde des Befestigungselements (10) schraubbar ist, dass die Abdeckung eben mit einer Oberfläche des Baustoffs ist.

2. Befestigungseinrichtung nach Anspruch 1, wobei die Dimensionierung des Verankerungsbereichs und der Klemmhülse derart aufeinander abgestimmt sind, dass die Klemmhülse durch den Verankerungsbereich zum Verklemmen radial aufweitbar ist.

3. Befestigungseinrichtung nach Anspruch 1 oder 2, wobei die Innenseite der Klemmhülse in flächigen Kontakt mit der Außenseite des konischen Verankerungsbereichs bringbar ist.

4. Befestigungseinrichtung nach einem der vorhergehenden Ansprüche, wobei die Klemmhülse einen Längsschlitz (21) aufweist.

5. Befestigungseinrichtung nach einem der vorhergehenden Ansprüche, wobei das Material der Klemmhülse Kunststoff, insbesondere Hart-PVC, oder Metall, insbesondere Messing, umfasst.

6. Befestigungseinrichtung nach einem der vorhergehenden Ansprüche, wobei der Befestigungsbereich ein Gewinde, insbesondere einen Gewindebolzen, und/oder eine Kalotte, insbesondere eine Kugelkalotte, und/oder einen Haken und/oder eine Öse und/oder einen Magneten und/oder ein Bajonett und/oder eine Klebefläche umfasst.

7. Befestigungseinrichtung nach einem der vorhergehenden Ansprüche, wobei das Befestigungselement Metall, bevorzugt Automatenstahl, umfasst.

8. Befestigungseinrichtung nach einem der vorhergehenden Ansprüche, wobei sich der konische Verankerungsbereich zum Befestigungsbereich hin verjüngt.

9. Befestigungseinrichtung nach einem der vorhergehenden Ansprüche, wobei die Klemmhülse and deren Außenseite konische Widerhaken (22) aufweist.

10. Verfahren zur Verankerung einer Befestigungseinrichtung nach einem der vorhergehenden Ansprüche in einem Baustoff, umfassend die folgenden Schritte:
Einbringen des Befestigungselements in ein Verankerungsloch, insbesondere in eine Bohrung, in dem Baustoff, wobei sich der konische Verankerungsbereich zur offenen Seite des Verankerungslochs hin verjüngt,
Verklemmen der Klemmhülse zwischen dem Verankerungsbereich und dem Baustoff.

11. Verfahren nach Anspruch 10, wobei das Verklemmen der Klemmhülse durch eine momentane Krafteinwirkung auf die Klemmhülse erfolgt, insbesondere durch Schlagen in axialer Richtung auf einen auf die Klemmhülse aufgebrachten Einschlagadapter, wodurch die Klemmhülse über den axial konischen Verankerungsbereich gleitet und dieser die Klemmhülse radial weitet und zwischen dem Verankerungsbereich und dem Baustoff verklemmt.

## Claims

1. A fastening device (30) for anchoring in a construction material with
a fastening element (10) which has an axially conical anchoring region (11) and a fastening region (12), and
a radially yielding clamping sleeve (20) which is capable of being clamped between the anchoring region and the construction material;
a covering (31) to cover the fastening element (10),
wherein the inner side of the clamping sleeve (20) is made conical at an angle which corresponds to that of the conical anchoring region (11), and
wherein the covering (31) is capable of being screwed onto a thread of the fastening element (10) in such a way that the covering is flush with a surface of the construction material.

2. A fastening device according to Claim 1, wherein the dimensions of the anchoring region and the clamping sleeve are adapted to each other in such a way that the clamping sleeve is capable of being widened radially by the anchoring region for clamping.

3. A fastening device according to Claim 1 or 2, wherein the inner side of the clamping sleeve is capable of being brought into planar contact with the outside of the conical anchoring region.

4. A fastening device according to any one of the preceding Claims, wherein the clamping sleeve has a longitudinal slot (21).

5. A fastening device according to any one of the preceding Claims, wherein the material of the clamping sleeve comprises plastics material, in particular hard PVC, or metal, in particular brass.

6. A fastening device according to any one of the preceding Claims, wherein the fastening region comprises a thread, in particular a threaded pin, and/or a cup, in particular a spherical cup, and/or a hook and/or an eyelet and/or a magnet and/or a bayonet and/or an adhesive area.

7. A fastening device according to any one of the preceding Claims, wherein the fastening element consists of metal, preferably free-cutting steel.

8. A fastening device according to any one of the preceding Claims, wherein the conical anchoring region tapers towards the fastening region.

9. A fastening device according to any one of the preceding Claims, wherein the clamping sleeve and the outside thereof have conical barbs (22).

10. A method of anchoring a fastening device according to any one of the preceding Claims in a construction material, comprising the following steps:
inserting the fastening element into an anchoring hole, in particular into a bore, in the construction material, wherein the conical anchoring region tapers towards the open side of the anchoring hole,
clamping the clamping sleeve between the anchoring region and the construction material.

11. A method according to Claim 10, wherein the clamping of the clamping sleeve is carried out by a momentary application of force upon the clamping sleeve, in particular by striking in the axial direction upon an impact adapter attached to the clamping sleeve, as a result of which the clamping sleeve slides over the axially conical anchoring region and the latter widens the clamping sleeve radially and clamps it between the anchoring region and the construction material.

## Revendications

1. Dispositif de fixation (30) destiné à l'ancrage dans un matériau de construction, et comprenant
un élément de fixation (10), qui présente une zone d'ancrage (11) axialement conique et une zone de fixation (12), et
une douille de serrage (20) radialement extensible, qui peut être serrée entre la zone d'ancrage et le matériau de construction ;
un cabochon de recouvrement (31) pour recouvrir l'élément de fixation (10) ;
dispositif de fixation
dans lequel le côté intérieur de la douille de serrage (20) est de configuration conique, avec un angle qui correspond à celui de la zone d'ancrage (11) conique ; et
dans lequel le cabochon de recouvrement (31) peut être vissé sur un filetage de l'élément de fixation (10) de manière telle que le cabochon de recouvrement arrive au ras d'une surface externe du matériau de construction.

2. Dispositif de fixation selon la revendication 1, dans lequel les dimensionnements de la zone d'ancrage et de la douille de serrage sont mutuellement adaptés l'un à l'autre, de manière à ce que la zone d'ancrage puisse produire, en vue du serrage, une expansion radiale de la douille de serrage.

3. Dispositif de fixation selon la revendication 1 ou la revendication 2, dans lequel le côté intérieur de la douille de serrage peut être amené en contact de surface avec le côté extérieur de la zone d'ancrage conique.

4. Dispositif de fixation selon l'une des revendications précédentes, dans lequel la douille de serrage présente une fente longitudinale (21).

5. Dispositif de fixation selon l'une des revendications précédentes, dans lequel la matière de la douille de serrage comprend une matière plastique, notamment du PVC dur, ou un métal, notamment du laiton.

6. Dispositif de fixation selon l'une des revendications précédentes, dans lequel la zone de fixation comprend un filetage, notamment une broche filetée, et/ou une calotte, notamment une calotte sphérique, et/ou un système de crochet et/ou un anneau et/ou un aimant et/ou un système à baïonnette et/ou une surface de collage.

7. Dispositif de fixation selon l'une des revendications précédentes, dans lequel l'élément de fixation comprend du métal, de préférence un acier de décolletage.

8. Dispositif de fixation selon l'une des revendications précédentes, dans lequel la zone d'ancrage conique se rétrécit en direction de la zone de fixation.

9. Dispositif de fixation selon l'une des revendications précédentes, dans lequel la douille de serrage présente sur son côté extérieur, des griffes d'accrochage coniques (22).

10. Procédé pour assurer l'ancrage d'un dispositif de fixation selon l'une des revendications précédentes, dans un matériau de construction, le procédé comprenant les étapes suivantes :
insertion de l'élément de fixation dans un trou d'ancrage, notamment un perçage, dans le matériau de construction, la zone d'ancrage conique se rétrécissant en direction du côté ouvert du trou d'ancrage,
serrage de la douille de serrage entre la zone d'ancrage et le matériau de construction.

11. Procédé selon la revendication 10, d'après lequel le serrage de la douille de serrage s'effectue par l'action momentanée d'une force sur la douille de serrage, notamment par frappe dans la direction axiale sur un adaptateur de frappe appliqué sur la douille de serrage, en faisant ainsi glisser la douille de serrage par-dessus la zone d'ancrage axialement conique, qui produit l'expansion radiale de la douille de serrage et le serrage de celle-ci entre la zone d'ancrage et le matériau de construction.
